# EUROPÄISCHE PATENTANMELDUNG

(11) **EP 2 111 937 A1**
(43) Veröffentlichungstag der Anmeldung: **28.10.2009**
(21) Anmeldenummer: 09156288.4
(22) Anmeldetag: 26.03.2009
(51) Int. Cl.: B21D 53/88, B23C 5/00

(54) **Verfahren zur Herstellung von in der Dicke variierenden Blechplatinen**

(30) Priorität: 23.04.2008 DE 102008020473
(71) Anmelder: Benteler Automobiltechnik GmbH, 33102 Paderborn (DE)
(72) Erfinder: Knaup, Hans-Jürgen, 33175 Bad Lippspringe (DE)
(74) Vertreter: Dantz, Jan Henning

(57) **Zusammenfassung**

Ein Verfahren zur Herstellung von in der Dicke (Z) variierenden flächigen Blechplatinen (1), insbesondere zur Fertigung von Bauteilen für Kraftfahrzeuge, bei dem
c) als Ausgangswerkstück eine Blechplatine mit einer variablen Dicke vorgefertigt wird; und
d) daraufhin die Blechplatine aus Schritt a) partiell nachbearbeitet, insbesondere nachgeprägt wird, so dass die Dicke der Blechplatine a), welche bereits eine variable Dicke aufweist, lokal geändert wird.

## Beschreibung

Die Erfindung betrifft ein Verfahren zur Herstellung von in der Dicke variierenden flächigen Blechplatinen, insbesondere zur Fertigung von Bauteilen für Kraftfahrzeuge.

Das Thema "Gewichtseinsparung" erlangt auch im Automobilbau immer mehr an Bedeutung und ist ein wichtiges Ziel der weiteren Entwicklung. Eine Möglichkeit zur Erreichung dieses Zieles besteht im Einsatz von gewichts- und festigkeitsoptimierten Blechplatinen für die Herstellung von umformtechnisch hergestellten Bauteilen für die Fahrzeuge.

Zur Herstellung der Blechplatinen ist es aus der DE 199 62 754 A1 bekannt, Metallbändern flexibel zu Walzen, so dass über die Länge des Metallbandes Bereiche unterschiedlicher Dicke entstehen (Tailor Rolled Blanks TRB).

Nach der Lehre der DE 102 46 164 A1 werden die mit Hilfe eines TRB-Verfahrens hergestellten Blechplatinen sodann in einem Warmformprozess in Richtung der Länge weiter zur Endform der Strukturbauteile umgeformt und mit dem letzten Umformvorgang im Werkzeug gehärtet.

Platinen, die derart gefertigt werden, weisen neben ihren zahlreichen Vorteilen auch Nachteile auf. So können Bänder nur auf ihrer vollen Breite in Längsrichtung zu Abschnitten mit verschiedenen Dicken gewalzt werden. Die Dickensprünge laufen dabei immer rechtwinklig zur Walzrichtung. Das hat unter anderen den Nachteil, dass Platinen mit sehr unterschiedlicher Breite durch die oben beschriebene Art der Abstufungen der Dicke meistens nicht materialsparend im Band verschachtelt werden können. Dadurch erhöht sich der Bedarf an dem durch den Walzvorgang ohnehin schon sehr teuren Ausgangsmaterial oft so stark, dass der Einsatz dieses Verfahrens nicht mehr wirtschaftlich ist.

Es ist auch bekannt, aus mehreren Blechen Metallbänder mit wiederum lediglich über den Bereich ihrer Länge unterschiedlicher Dicke zu schweißen (TailorWelded Blanks).

Daneben gibt es auch Vorschläge, in speziellen Fällen die Dicke von Platinen durch spanabhebende Verfahren in verschiedenen Richtungen zu optimieren.

So sollen in vielen Fällen Bauteile aus Gewichts- und fügetechnischen Gründen nicht über die gesamte Breite verstärkt werden. Dieses Problem kann bisher nur durch Patchwork, spezielle Tailor Welded Blanks oder gefräste Platinen gelöst werden. All diese Lösungen sind sehr teuer und haben folgende technische Nachteile:

Beim Patchwork müssen Platine und Patch separat geschnitten und vor allem gemeinsamen umgeformt und danach oft auch noch miteinander verschweißt werden. Außerdem sind die Patches nicht vollflächig mit dem Grundmaterial verbunden. Aus diesem Grund ist zur Vermeidung der Spaltkorrosion zwischen den beiden aufeinander liegenden Blechen ein sehr hoher Aufwand notwendig. Das kann sogar dazu führen, dass die Bleche zunächst miteinander verschweißt (geheftet), dann gemeinsam verformt, wieder getrennt, mit Korrosionsschutz versehen und anschließend endgültig miteinander verschweißt werden. Das Patchwork erreicht auch nie die Festigkeit einer massiven, aus einem Stück bestehenden Konstruktion.

Gefräste Platinen sind vor allem in Fällen, in denen große Bereiche spanabhebend bearbeitet werden müssen, wegen des großen Materialverlustes und der hohen Kosten für die Bearbeitung unwirtschaftlich.

Ein großflächiges Verprägen von Platinen zur Erreichung der Dickenabstufung ist wegen der dafür benötigten Kräften und schwierigen Umformbedingungen selbst im warmen Zustand kaum möglich.

Die DE 101 45 241 C2 schlägt vor, durch spanabhebende Bearbeitung mit geometrisch bestimmter Schneide, insbesondere Fräsen, eine Platine herzustellen und diese anschließend einer Kalt- oder Warmumformung zuzuführen.

Die Erfindung hat demgegenüber die Aufgabe, ein nochmals vereinfachtes Verfahren zur Herstellung von im Wesentlichen flächigen Blechplatinen zu schaffen, die jedenfalls abschnittsweise in zwei Erstreckungsrichtungen in der Dicke variieren.

Die Erfindung löst diese Aufgabe durch den Gegenstand des Anspruchs 1.

Sie schafft ein Verfahren zur Herstellung von in der Dicke variierenden Blechplatinen, insbesondere zur Fertigung von Bauteilen für Kraftfahrzeuge, bei dem
a) als Ausgangswerkstück eine Blechplatine mit einer variablen Dicke vorgefertigt wird; und
b) daraufhin die Blechplatine aus Schritt a) partiell nachbearbeitet, insbesondere nachgeprägt wird, so dass die Dicke der Blechplatine a), welche bereits eine variable Dicke aufweist, lokal geändert wird.

Durch das erfindungsgemäße Verfahren wird es möglich, kostengünstig und in hoher Qualität dickenoptimierte Blechplatinen herzustellen.

Vorzugsweise wird die Blechplatine aus Schritt a) mit einer in nur einer ersten Richtung variablen Dicke aus einem Metallband entnommen, das mit Hilfe eines Verfahrens zum flexiblen Walzen (Tailor Rolled Blanks) hergestellt wurde. Dabei variiert die Dicke in der Regel nur in Walzrichtung.

Es ist aber auch denkbar, dass die Blechplatine aus Schritt a) mit einer variablen Dicke aus einem Metallband entnommen wird, das aus mehreren Blechen gelötet oder geschweißt wurde (Tailor Welded Blanks).

Die mittels eines TRB- oder TWB-Verfahrens bereitgestellte und ggf. aus einem Band entnommene, insbesondere geschnittene Blechplatine wird nur lokal nachgearbeitet, was den Materialverlust - bei Einsatz eines spanabhebenden Verfahrens - zur Nachbearbeitung gering hält. Sowohl das spanabhebende Nachbearbeiten als auch das Nachprägen sind zudem schnell und kostengünstig durchführbar.

Die Übergänge zwischen den Bereichen verschiedener Dicke können umlaufend optimiert werden, d.h. insbesondere weich und festigkeitsoptimiert ausgestaltet werden.

Bei der Herstellung dickenoptimierter Blechplatinen zur Herstellung pressgehärteter Warmformteile bietet es sich an, die für das Presshärten erwärmte Blechplatine zunächst durch einen schnellen Schlag warm zu verprägen. Wegen der kurzen Kontaktzeit mit dem eventuell beheizten Prägewerkzeug würde dem Werkstück nur so wenig Wärme entzogen, dass das anschließende Presshärten "aus einer Hitze" erfolgen könnte.

Vorteilhafte Ausgestaltungen der Erfindung sind den Unteransprüchen zu entnehmen.

Nachfolgend wird die Erfindung unter Bezug auf die Zeichnung näher beschrieben.

Es zeigen:
- Fig. 1a und 1b: zwei um 90° zueinander senkrechte Ansichten einer Blechplatine;
- Fig. 2a und 2b: zwei um 90° zueinander senkrechte Ansichten der Blechplatine aus Fig. 1 nach einer weiteren Bearbeitung;
- Fig. 3: eine schematische Darstellung des Blechzuschnittes aus Fig.1 bei der Nachbearbeitung mit einem Fräswerkzeug; und
- Fig. 4: eine schematische Darstellung des Blechzuschnittes aus Fig.1 bei der Nachbearbeitung mit einem Prägewerkzeug.

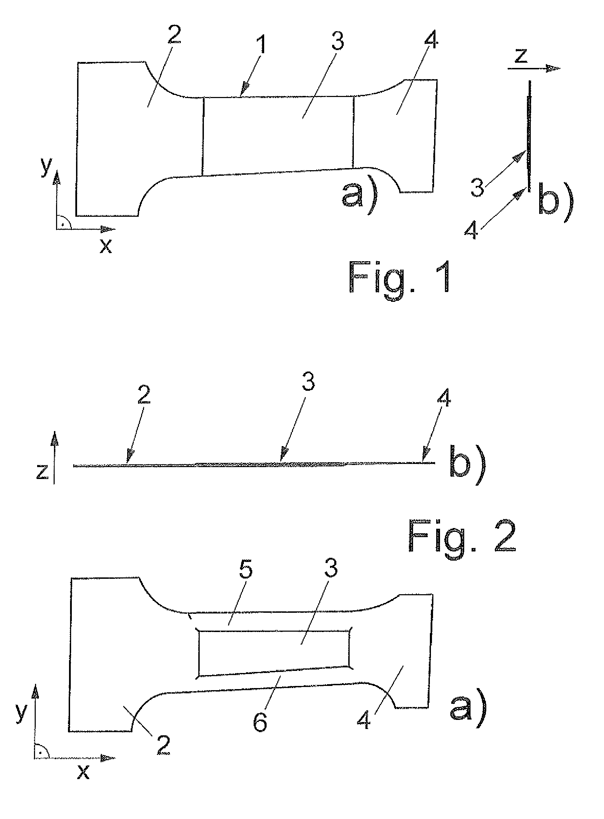

Fig. 1a und b zeigen zwei um 90° zueinander senkrechte Ansichten einer Blechplatine 1, die aus einem Metallband geschnitten ist, welches über seine Länge eine variable Dicke aufweist.

Derartige Metallbänder können kostengünstig beispielsweise mittels eines TRW- oder TWB-Verfahrens hergestellt und werden gewickelt bzw. als Bandprodukt zur Weiterverarbeitung bereitgestellt. Sodann wird die Kontur der Fig. 1 ausgeschnitten.

Die Blechplatine 1 aus Fig. 1 erstreckt sich dementsprechend flächig in der X-Y-Ebene und weist hier beispielhaft zunächst nur in X- Richtung eine variable Dicke Z bzw. Bereiche 2, 3, 4 mit verschiedener Dicke Z auf. In der senkrecht zur X-Richtung verlaufenden Y-Richtung ist die Dicke Z der Blechplatine 1 dagegen bei dem dargestellten Beispiel konstant.

Sodann wird an der derart vorgefertigten Blechplatine 1 mittels partieller lokaler Nachbearbeitung in wenigstens einem oder mehreren Bereichen 5, 6 die Dicke Z des Blechzuschnitts verändert, insbesondere in dem dargestellten Beispiel derart, dass die Blechplatine 1 infolge der Nachbearbeitung nicht nur in der Längsrichtung X des Metallbandes, aus dem sie geschnitten wurde, eine variable Dicke Z aufweist sondern auch senkrecht dazu in Y-Richtung. Auf eine derartige Ausgestaltung ist die Erfindung aber nicht beschränkt. Sie ermöglicht insbesondere ein besonders verlustarmes Anordnen von Platinen in einem Materialband, aus dem sie ausgeschnitten werden.

Die hierdurch entstehende Blechplatine 1 der Fig. 2 eignet sich insbesondere hervorragend zur Weiterverarbeitung zu einem Karosserieteil eines Fahrzeugs.

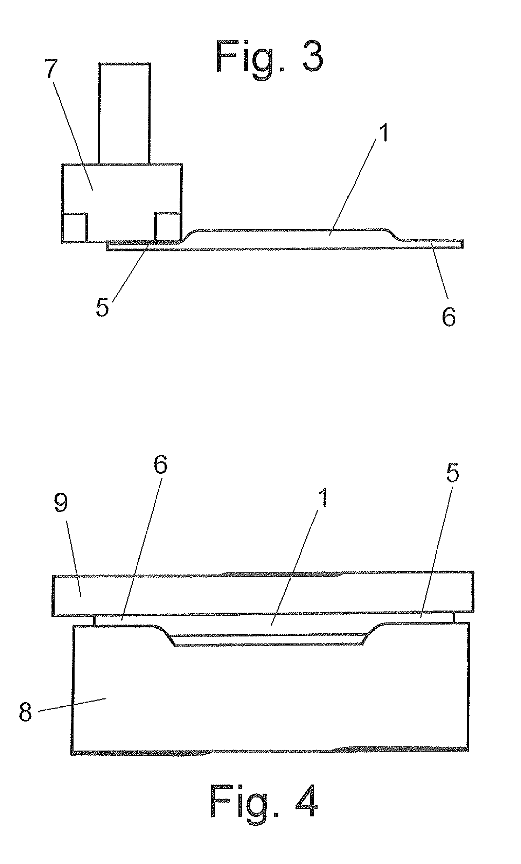

Die partielle Dickenänderung zur Herstellung der Blechplatine 1 der Fig. 2 erfolgt vorzugsweise mit Hilfe eines spanabhebenden Verfahrens, insbesondere mittels eines lokalen Fräsens (angedeutet durch das Fräswerkzeug 7 in Fig. 3).

Die partielle Dickenänderung kann alternativ aber auch mittels eines Kalt- oder Warmprägens (angedeutet durch den Prägestempel mit Stempeloberteil 8 und Stempelunterteil 9 in Fig. 4) erfolgen.

Das Nachbearbeiten der in einer Richtung bereits mit einer variablen Dicke versehenen TRB- oder TWB-Blechplatinen 1 durch Fräsen bietet den besonderen Vorteil, dass der Materialverlust und der Zerspanungsaufwand zur Variation der Dicke in zwei zueinander senkrechten Richtungen relativ gering gehalten werden können.

Das Prägen ist zudem besonders schnell und einfach durchführbar.

**Bezugszeichen**

| | |
|---|---|
| Blechplatine | 1 |
| Bereiche | 2, 3, 4 |
| Bereiche | 5, 6 |
| Fräswerkzeug | 7 |
| Stempeloberteil und - unterteil | 8, 9 |

## Patentansprüche

1. Verfahren zur Herstellung von in der Dicke (Z) variierenden flächigen Blechplatinen (1), insbesondere zur Fertigung von Bauteilen für Kraftfahrzeugen, bei dem
a. als Ausgangswerkstück eine Blechplatine mit einer variablen Dicke (Z) vorgefertigt wird; und
b. daraufhin die Blechplatine aus Schritt a) partiell nachbearbeitet, insbesondere nachgeprägt wird, so dass die Dicke der Blechplatine a), welche bereits eine variable Dicke aufweist, lokal geändert wird.

2. Verfahren nach Anspruch 1, **dadurch gekennzeichnet, dass** die Blechplatine (1) aus Schritt a) mit einer variablen Dicke aus einem Metallband entnommen wird, das mit Hilfe eines Verfahrens zum flexiblen Walzen hergestellt wurde.

3. Verfahren nach Anspruch 1, **dadurch gekennzeichnet, dass** die Blechplatine (1) aus Schritt a) aus einem Metallband entnommen wird, das aus mehreren Blechen gelötet oder geschweißt ist.

4. Verfahren nach einem der vorstehenden Ansprüche, **dadurch gekennzeichnet, dass** die lokale Dickenänderung zur Herstellung der Blechplatine (1) mittels eines lokalen spanabhebenden Nachbearbeitens erfolgt.

5. Verfahren nach Anspruch 4, **dadurch gekennzeichnet, dass** die partielle Dickenänderung zur Herstellung der Blechplatine (I) mittels Fräsens erfolgt.

6. Verfahren nach einem der vorstehenden Ansprüche 1 bis 3, **dadurch gekennzeichnet, dass** die partielle Dickenänderung zur Herstellung der Blechplatine (1) mittels eines Kaltprägens erfolgt.

7. Verfahren nach einem der vorstehenden Ansprüche 1 bis 3, **dadurch gekennzeichnet, dass** die partielle Dickenänderung zur Herstellung der Blechplatine (1) mittels eines Warmprägens erfolgt.

8. Verfahren nach einem der vorstehenden Ansprüche, **dadurch gekennzeichnet, dass** die für ein Presshärten erwärmte Platine durch einen schnellen Schlag warm verprägt wird.
